# FASCICULE DE BREVET EUROPEEN

(11) **EP 1 550 379 B1**
(45) Date de publication et mention de la délivrance du brevet: **05.05.2010**
(21) Numéro de dépôt: 04300925.7
(22) Date de dépôt: 20.12.2004
(51) Int. Cl.: A23N 15/00

(54) **Procédé et installation pour préparer des têtes de salade**
Verfahren und Vorrichtung zum Vorbereiten von Salatköpfen
Method and device to prepare lettuces

(30) Priorité: 30.12.2003 FR 0315562
(43) Date de publication de la demande: 06.07.2005
(73) Titulaire: FLORETTE, Société par actions simplifiée, 50430 Lessay (FR)
(72) Inventeur: Savary, Laurent, 50430 Angoville Sur Ay (FR)
(74) Mandataire: Herrburger, Pierre

(56) Documents cités:
- WO-A-03/015541
- SU-A- 1 321 404
- US-A1- 2003 170 350
- PATENT ABSTRACTS OF JAPAN vol. 1998, no. 11, 30 septembre 1998 (1998-09-30) & JP 10 146181 A (OKABE LOCK:KK), 2 juin 1998 (1998-06-02)
- PATENT ABSTRACTS OF JAPAN vol. 2000, no. 02, 29 février 2000 (2000-02-29) & JP 11 300693 A (SUZUYO KOGYO KK), 2 novembre 1999 (1999-11-02)

## Description

### Domaine de l'invention

La présente invention concerne un procédé et une installation pour préparer des têtes de salade avec des moyens pour enlever le trognon de la tête avant de découper celle-ci. L'invention s'applique, de façon générale, à des pièces telles que des têtes de salade ou légumes de ce type dont il faut séparer le trognon de la partie utile avant de traiter celle-ci, en particulier de la découper.

### Etat de la technique

Il est déjà connu d'étrogner les têtes de salade avant de les découper voir par exemple US 2003/0170350. Ces opérations se font d'une manière quasi automatique dans une installation recevant les têtes de salade. Cette installation comporte des moyens de transport munis de crochets qui se fixent dans la tête de salade au niveau du trognon. Ensuite, la tête passe dans un poste d'étrognage dans lequel la partie du trognon est découpée pour être séparée de la partie utile. Quoique intéressante, cette installation présente néanmoins l'inconvénient du chargement manuelle de la pièce ou « tête de salade » qu'il faut présenter avec la queue tournée vers le haut, et l'appliquer contre un élément de transport, d'axe incliné, dont les crochets sont ouverts. Après présentation de la tête de salade, les crochets se referment autour du trognon pour tenir la tête et la transporter jusqu'au niveau du couteau qui découpe le trognon.

Cette installation a également l'inconvénient de ne pouvoir poursuivre automatiquement le traitement des parties utiles des pièces après l'enlèvement du trognon.

### But de l'invention

La présente invention a pour but de développer une installation du type ci-dessus ainsi qu'un procédé pour faciliter la mise en place de la pièce à étrogner, notamment d'une tête de salade, et aussi de permettre de recueillir la partie utile de la pièce pour la poursuite automatique des opérations sur celle-ci tout en améliorant les conditions de sécurité du travail au moment de la mise en place de la pièce dans l'installation.

### Exposé et avantages de l'invention

A cet effet, l'invention concerne un procédé de préparation de pièces et notamment de têtes de salade ou légumes analogues, qu'il faut étrogner, caractérisé en ce qu'on forme une ligne de repère, lumineuse, visible, dans la zone de mise en place de la pièce sur un support de positionnement, cette ligne définissant l'orientation de la pièce puis on met la pièce en place sur le support en la bloquant et on transporte la pièce ainsi positionnée avec le support jusque contre le dispositif d'accrochage pour reprendre automatiquement la pièce et l'accrocher en vue de la transporter pour l'étrogner.

L'invention concerne également une installation pour la préparation de pièces à étrogner, notamment de têtes de salade du type défini ci-dessus, caractérisée en ce qu'elle comprend
- un poste de positionnement des pièces (têtes de salade) suivant une orientation déterminée,
- un poste d'accrochage reprenant les pièces positionnées dans le poste de positionnement, pour les transporter en position suspendue et
- un poste d'étrognage dans lequel on enlève le trognon de la pièce en position suspendue,
- un ensemble de modules de support ayant chacun un support de réception et de blocage pour recevoir et bloquer les pièces et les transporter,
   ces modules parcourant un chemin de positionnement traversant le poste de positionnement,
- un ensemble d'éléments de transfert munis d'organes d'accrochage pour se fixer dans la pièce au niveau du trognon, ces éléments de transfert circulant sur un chemin de transfert qui rejoint le chemin de positionnement et traverse le poste d'accrochage et le poste d'étrognage,
   * le poste de positionnement comportant un générateur formant une ligne de repère, lumineuse, dans une position définie par rapport au module de support arrivant dans le poste de positionnement pour définir la position de mise en place de la pièce par rapport au support de réception,
   * le poste d'accrochage recevant les pièces orientées, portées par le support des modules de support,
   * le poste d'étrognage comportant un dispositif de coupe muni d'un couteau recevant successivement les éléments de transfert pour étrogner les pièces dont le trognon coupé reste accroché aux éléments de transfert.

Ainsi, selon l'invention, la mise en place des pièces à étrogner se fait d'une manière extrêmement simple et sans risque pour l'opérateur. Celui-ci se sert de la ligne de repère en lumière visible, formée au-dessus du support de réception pour installer la pièce en position renversée, la queue, c'est-à-dire la partie du trognon, tournée vers le haut et de façon alignée sur la ligne de repère. Comme cette ligne de repère est un faisceau de lumière, elle peut être coupée par la pièce tout en restant matérialisée dans l'espace. Cela facilite considérablement la mise en place de la pièce et surtout la bonne orientation, à vue, de la partie supérieure de la pièce. La ligne de repère est de préférence verticale de sorte qu'il suffit d'abaisser naturellement la pièce à installer sur le support et non pas comme dans l'installation connue la soulever et la présenter suivant une inclinaison donnée. Le geste est naturel donc beaucoup plus facile, plus précis et moins fatigant. En outre, l'opérateur ne risque pas de se blesser contre les griffes d'un organe d'accrochage qui sont nécessairement longues et courbes pour bien planter dans la matière de la pièce au niveau du trognon.

La mise en place de la pièce sur les picots du support ne présente pas ce risque car ces picots sont relativement courts puisqu'ils servent uniquement à retenir la pièce pendant son transport et non au cours de la découpe du trognon et surtout ils sont situés du côté opposé du trognon.

Cette mise en place est d'autant plus facile que le module de support se compose d'un corps avec un support de réception muni de picots sur lesquels on embroche une pièce pour la positionner, ce support étant mobile en translation verticale par rapport au corps, commandé par un actionneur en fonction de la position du module sur son chemin,
* en position basse pour la mise en place de la pièce dans le poste de positionnement et
* en position haute pour conduire la pièce sous un élément de transfert dans le poste d'accrochage.

Les picots étant dressés verticalement par rapport à la surface de support, c'est-à-dire parallèlement à la ligne de repère, l'opérateur positionne la pièce au-dessus des picots du support de réception et l'oriente convenablement. Puis par un simple mouvement de descente il embroche le dessous de la pièce ainsi retournée, dans les picots. Ceux-ci bloquent la position de la pièce pendant son transport jusqu'au niveau des organes d'accrochage de l'élément de transfert. Ainsi, la pièce est non seulement positionnée correctement mais elle le reste pendant toutes les opérations avant et pendant l'étrognage, de manière à être sûr que l'étrognage se fasse au bon endroit, c'est-à-dire autour du trognon.

Suivant une autre caractéristique avantageuse, le générateur de faisceau positionne son faisceau formant la ligne de repère lumineuse sur le module de support arrivant dans le poste de positionnement pour le suivre pendant la mise en place de la pièce.

Comme la ligne de repère reste maintenue pendant la mise en place de la pièce cela permet non seulement de disposer de suffisamment de temps pour installer la pièce dans le support de réception mais aussi de vérifier, pendant tout ce temps, sa bonne orientation.

En effet, tout défaut d'orientation, sensible, se traduirait par un mauvais étrognage, c'est-à-dire l'enlèvement seulement d'une partie du trognon et la découpe de la partie utile de la pièce, ce qui nécessiterait le rejet de la partie utile.

Suivant une autre caractéristique avantageuse, l'élément de transfert comporte des crochets actionnés pour se fixer dans le trognon de la pièce en laissant le contour dégagé pour le passage du couteau d'étrognage.

Suivant une autre caractéristique avantageuse, le poste d'étrognage comprend
- un dispositif de coupe muni d'un couteau, le dispositif étant fixe et le couteau mobile entre une position rétractée et une position de coupe enfoncée dans la pièce à étrognée,
- un dispositif d'entraînement en rotation de l'élément de transfert en position de coupe.

L'installation selon l'invention est avantageusement complétée par un poste de coupe en aval du poste d'étrognage, ce poste étant muni d'un couteau pour diviser la pièce étrognée en plusieurs parties et un ensemble de modules de coupe circulant sur un chemin de coupe traversant le poste d'étrognage et rencontrant le chemin de transfert pour se fixer chacun à une pièce accrochée à un élément de transfert et passer ensemble dans le dispositif d'étrognage qui découpe le trognon accroché à l'élément de transfert pour le séparer de la partie utile de la pièce qui reste fixée à son module de coupe pour être transportée dans le poste de coupe.

Le transfert vers le poste de coupe se fait automatiquement, de même que l'opération de coupe.

Profitant de l'orientation correcte de la pièce dans l'élément de transfert, il est avantageux d'associer immédiatement la pièce au module de coupe avant même que la pièce ne soit étrognée. On reprend ainsi la bonne orientation de la pièce qui servira pour l'opération ultérieure, en particulier la coupe car elle aussi doit être faite de manière précise par rapport à la forme de la pièce ou plus exactement de la partie utile préalablement étrognée. Cette coupe peut se faire par moitié ou par quart. Les morceaux ainsi obtenus peuvent être fournis tels quels aux commerces ou divisés ensuite en morceaux plus réduits pour être conditionnés sous forme de lots de salades épluchées et nettoyées.

De façon avantageuse, le module de coupe comprend un corps recevant
- un support de coupe mobile en translation entre une position abaissée et une position relevée,
- une aiguille portée par la support, mobile entre une position sortie pour se fixer dans la pièce et une position rétractée,
- un premier et un second vérin commandant respectivement le déplacement du support par rapport au corps et celui de l'aiguille.

Ainsi, le couteau du poste de coupe est en position fixe et la partie utile de la pièce portée par le module de coupe est déplacée par rapport au couteau, par exemple soulevée, d'autant plus que le module de coupe comporte déjà les moyens pour effectuer ce mouvement.

Bien que suivant un mode de réalisation avantageux le module de coupe comporte une aiguille en position centrale ou légèrement désaxée pour que le couteau du poste de coupe puisse venir en position centrale, cette position n'a pas à être respectée d'une manière aussi stricte que la précision industrielle étant donné que la forme de la pièce, c'est-à-dire de la tête de salade, elle-même peut varier ; la précision de la coupe en moitiés, quartiers ou autres doit être précise mais peut souffrir du léger décalage entre l'aiguille et le couteau qui doit nécessairement passer à côté de l'aiguille.

Il est également possible d'utiliser un couteau mobile qui, par une descente verticale, coupera la salade fixée par l'aiguille.

Il est également possible de multiplier le nombre d'aiguilles, par exemple de prévoir deux aiguilles placées dans une position symétrique par rapport à la ligne de repère suivant laquelle la pièce a été installée et le couteau peut alors passer dans l'intervalle entre les deux aiguilles. Après la coupe, la rétraction des aiguilles libère les parties de la pièce découpée.

### Dessins

La présente invention sera décrite ci-après de manière plus détaillée à l'aide d'un mode de réalisation représenté dans les dessins annexés dans lesquels :
- la figure 1 est une vue sous la forme d'un schéma par blocs d'une installation selon l'invention,
- la figure 1A est une vue de côté simplifiée d'une réalisation d'une partie de l'installation selon l'invention,
- les figures 2A, 2B montrent les différentes parties de l'installation selon l'invention suivant une présentation développée,
- la figure 3 est une vue en coupe du module de positionnement,
- la figure 4 est une vue en coupe du module de coupe.

### Description du mode de réalisation

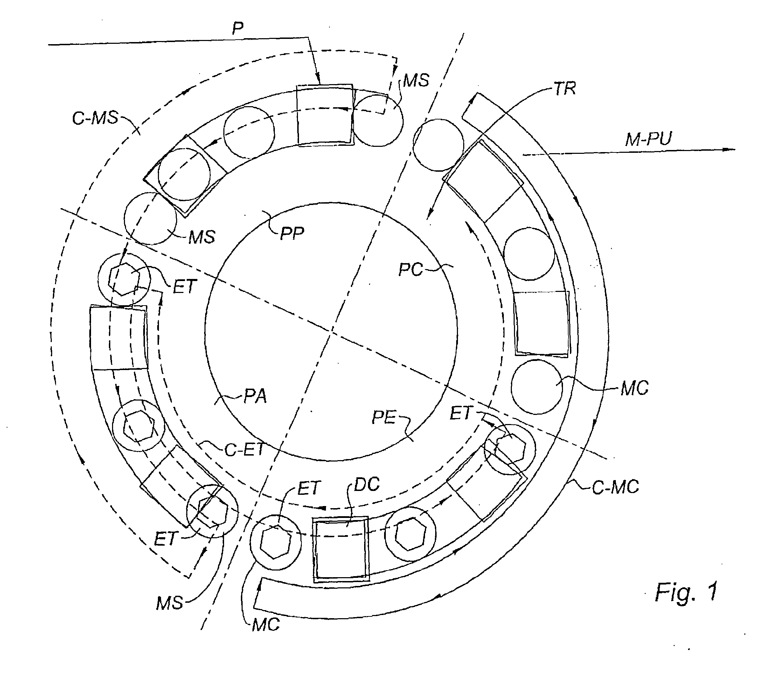

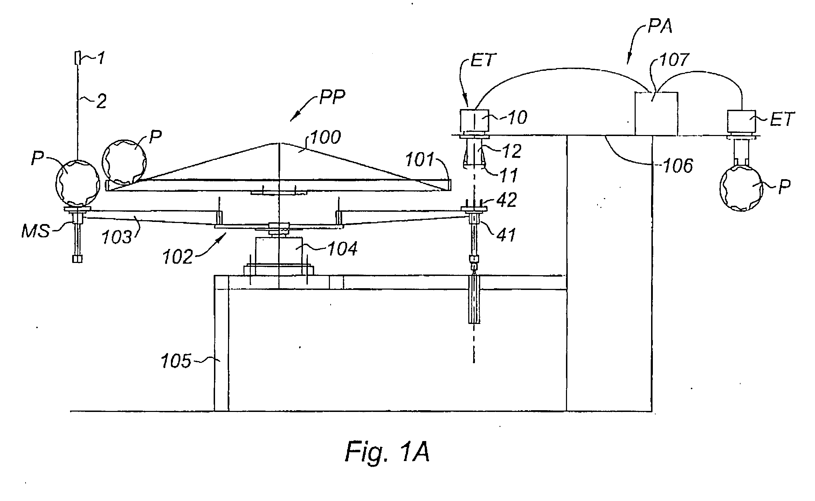

Selon la figure 1, un mode de réalisation d'une installation pour préparer des têtes de salade ou produits de ce type appelés pièces P ci-après dans la suite de la description, en les étrognant, se compose de moyens de circulation et de transport équipant par exemple un tambour TR rotatif ou une des chaînes de transport passant dans différents postes. A l'entrée, l'installation comporte un poste de positionnement PP dans lequel un opérateur positionne les pièces à travailler P suivant une orientation déterminée. Les pièces P sont ainsi positionnées sur des modules de support MS pour être transportées dans un poste d'accrochage PA. Dans celui-ci, les pièces P sont reprises des modules de support MS par des éléments de transfert ET munis d'organes d'accrochage qui se fixent dans la pièce P au niveau du trognon T. La pièce ainsi en position suspendue, verticale, est transférée par l'élément de transfert ET dans un poste d'étrognage PE équipé d'un dispositif de coupe DC qui découpe le trognon de chaque pièce. Le trognon est évacué et la partie utile de la pièce est récupérée.

Selon un développement de cette installation, en aval du poste d'étrognage PE, il est prévu un poste de coupe PC et des modules de coupe MC sont fixés à la pièce P avant même que celle-ci ne soit étrognée pour reprendre la pièce dans son orientation correcte. Puis, après l'étrognage, le module de coupe MC évacue la partie utile de la pièce pour la transporter dans le poste de coupe PC alors que l'élément de transfert ET retient le trognon et l'évacue puis revient à l'entrée du poste d'accrochage PA. La partie utile PU est alors découpée de façon précise dans le poste de coupe PC et les morceaux M-PU sont évacués pour être traités ou conditionnés.

La figure 1 montre les différents chemins de positionnement C-MS, de transfert C-ET et de coupe C-MC suivis respectivement par les modules de support MS, les éléments de transfert ET et les modules de coupe MC. Le chemin de positionnement C-MS entre dans le poste de positionnement PP pour sortir du poste d'accrochage PA. Le chemin de transfert C-ET suivi par les éléments de transfert ET pénètre dans le poste d'accrochage PA pour le traverser ainsi que le poste d'étrognage PE et revenir ensuite à l'entrée du poste d'accrochage PA. Le chemin C-MC des modules de coupe entre dans le poste d'étrognage PE pour traverser celui-ci ainsi que le poste de coupe PC et en sortir pour revenir à l'entrée du poste d'étrognage PE.

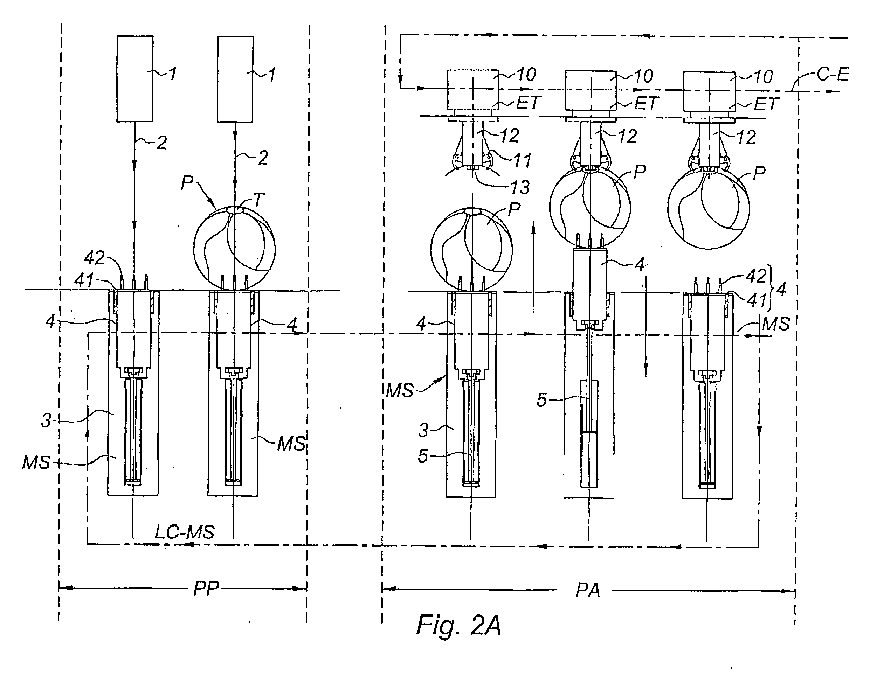

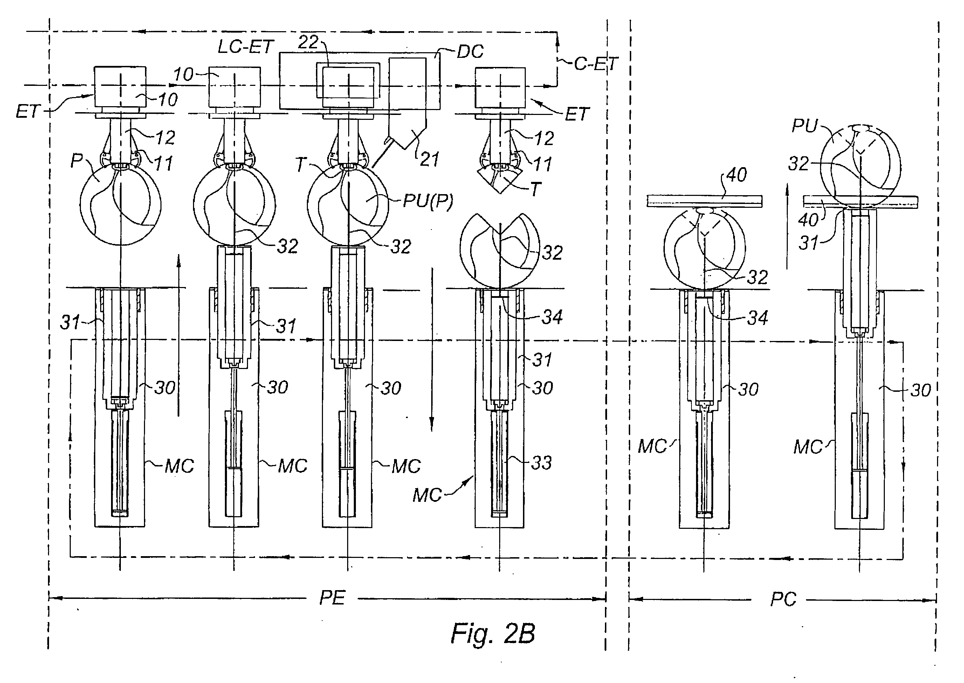

La figure 1A montre en vue de côté et de manière schématique une partie de l'installation. Le poste de préparation PP comporte une arrivée 100 en forme de tronc de cône avec un bord extérieur 101 pour recevoir les produits P représentés par des boules. Ces produits déversés sur le cône 100, sont retenus par le rebord 101 tout en étant facilement accessibles. L'installation montre également le générateur de faisceau 1 tel qu'un laser qui génère le faisceau de positionnement 2. Les modules de support MS sur lesquels on positionne de manière orientée les produits P sont réalisés comme cela sera décrit ci-après à l'aide des figures 2A, 2B. Ces modules sont portés par un rotor 102 muni de bras 103, radiaux, l'ensemble étant entraîné en rotation par un moteur 104, synchronisé, porté par un bâti 105.

La figure 1A montre également le poste d'accrochage PA avec les éléments de transfert ET comportant un actionneur 10 portant des crochets 11 par l'intermédiaire d'un vérin 12. Ce poste d'accrochage est également constitué par un rotor 106 entraîné en rotation par un moteur 107, synchronisé sur le mouvement général de l'installation.

Les différentes opérations seront décrites de manière plus détaillée à l'aide des schémas des figures 2A, 2B.

Ces figures montrent respectivement et dans l'ordre le poste de positionnement PP suivi du poste d'accrochage PA, ensuite le poste d'étrognage PE et le poste de découpe PC.

Le poste de positionnement PP des pièces P comporte un générateur 1 formant un faisceau lumineux 2 définissant une ligne de repère lumineuse (en lumière visible) par exemple le faisceau d'un laser de très faible puissance travaillant en lumière visible rouge ou verte. Cette ligne de repère 2 est orientée de manière précise et notamment dans la direction verticale. Elle est fixe mais elle peut également se déplacer dans le poste de positionnement PP pour les raisons expliquées ultérieurement.

Le générateur 1 est directement installé à l'endroit indiqué ou comporte un moyen de déplacement optique de la ligne de repère, tel qu'un miroir mobile, le générateur 1 restant en position fixe (cette variante n'étant pas représentée).

Le poste de positionnement PP coopère avec un ensemble de modules de support MS. Ces modules de support se composent chacun d'un corps 3 recevant un support de réception 4 commandé par un vérin 5 associé au corps 3. Le support de réception 4 est mobile verticalement ou plus généralement dans la direction de la ligne de repère 2, le mouvement étant commandé par le vérin 5. Le support de réception 4 est constitué très schématiquement par une plaque 41 dont la face supérieure est garnie de quelques picots 42 verticaux. Ces picots 42 sont fixes par rapport à la plaque 41.

Les modules de support MS circulent suivant le chemin de circulation C-MS à travers une partie de l'installation ; ils peuvent faire partie d'un tambour ou d'une chaîne de convoyeur.

Selon le mode de fonctionnement de l'installation, les modules de support MS peuvent soit s'arrêter en position de chargement dans le poste de chargement, soit circuler dans celui-ci si l'installation travaille partiellement ou globalement selon le principe de la cinématique continue.

Dans les deux cas, selon le schéma de la figure 2A, le module de support MS qui arrive dans le poste de positionnement PP rencontre à un certain moment la ligne de repère 2 formée par le générateur de faisceau 1. Cette ligne de repère 2 est orientée de manière précise par rapport au support de réception 4 pour servir de repère à l'opérateur pour que celui-ci puisse installer la pièce P dans ou sur le support de réception 4. Pour cela, il prend la pièce P, la retourne de façon que son trognon T soit tourné vers le haut et surtout il l'aligne sur la ligne de repère 2. Une fois cette orientation réalisée, il embroche le dessous de la pièce retournée dans les picots 42. Les picots 42 sont suffisamment longs suivant la nature de la pièce P pour que celle-ci reste bloquée en position. Le module de support MS transporte ensuite la pièce P dans le poste d'accrochage PA. Le chemin de circulation des modules de support C-MS est représenté par un tracé en trait interrompu.

Le poste d'accrochage PA ne comporte pas de moyen fixe. Il est traversé par le chemin C-MS suivi par les modules de support MS et par le chemin C-ET des éléments de transfert ET. Ces chemins C-MS/C-ET coïncident l'un avec l'autre dans le poste d'accrochage PA. Les éléments de transfert ET sont constitués par un corps logeant un actionneur 10 et portant des crochets 11 pivotant entre une position ouverte et une position fermée. Ils sont actionnés par un vérin 12 ou un mécanisme de ce type qui les fait passer d'une position à l'autre. L'élément de transfert ET peut comporter un palpeur 13 détectant l'arrivée de la pièce P, par exemple contre l'extrémité du support des crochets 11. Il déclenche alors directement ou de manière temporisée, l'actionnement des crochets 11 qui se referment dans la pièce P.

Selon le mode de réalisation représenté, les éléments de transfert ET arrivent dans le poste de positionnement PP et suivent un trajet horizontal. Il en est de même des modules de support MS qui suivent leur chemin dans le poste d'accrochage PA.

A l'entrée, le mouvement des éléments de transfert ET et des modules de support MS est synchronisé de façon que l'axe d'un élément de transfert ET et celui d'un module de support MS coïncident. Puis le module de support MS commande le soulèvement du support de réception 4 chargé de la pièce P pour rencontrer l'élément de transfert ET. L'entrée en contact de la pièce et du corps de l'élément de transfert déclenche l'actionnement des crochets 12 de l'élément de transfert. Ces crochets 12 pivotent et se plantent dans la pièce P à l'endroit correspondant au trognon T (si la pièce a été positionnée correctement).

L'élément de transfert ET ainsi chargé de la pièce P poursuit son chemin de transfert C-ET jusque dans le poste d'étrognage PE. L'axe d'orientation étant vertical comme cela a été précisé au début de la description, la pièce P est ainsi accrochée en position suspendue à l'élément de transfert ET. Une fois l'accrochage réalisé, le support de réception 4 est commandé de façon à se dégager de la pièce P. Il redescend dans le module de support MS pendant que celui-ci poursuit son chemin pour sortir du poste d'accrochage PA et revenir à l'entrée du poste de positionnement PP.

Selon la figure 2B, le poste d'étrognage PE se compose de la partie de chemin de transfert C-ET empruntée par les éléments de transfert ET chargés d'une pièce P. Il comporte également un dispositif de coupe DC muni d'un couteau 21. Ce dispositif DC est fixe. Il est placé sur le trajet de la pièce P suspendue à l'élément de transfert ET. Le couteau 21 est mobile entre une position rétractée et une position déployée, engagé dans la pièce P au niveau de la surface à découper pour séparer le trognon T de la partie utile PU de la pièce P. Ce couteau 21 est commandé en fonction de la position de l'élément de transfert ET chargé de la pièce. Le couteau 21 peut être fixe à l'exception de son mouvement de dégagement et de rétraction mais il peut également être entraîné d'un mouvement de vibration pour faciliter la découpe. Ce couteau 21 est dirigé en position inclinée puisque le trognon ou plus généralement la partie du trognon T de la pièce à enlever correspond à une forme sensiblement conique, évasée.

Le dispositif de coupe DC comporte également un dispositif d'entraînement en rotation 22 qui commande l'élément de transfert ET en position de coupe pour l'entraîner en rotation par rapport au couteau 21.

Il a été indiqué que le dispositif de coupe DC était fixe. Cette immobilité est relative. Ce dispositif DC, ou du moins son couteau 21, est fixe par rapport à l'élément de transfert ET et il effectue autour de celui-ci un mouvement de rotation relative pour découper le trognon T.

Si le dispositif de coupe DC est fixe par rapport à l'installation, cela suppose que l'élément de transfert ET s'immobilise pendant le temps, nécessaire à la coupe dans le poste d'étrognage PE. Mais il est également possible d'envisager une opération effectuée en cinématique continue, le dispositif de coupe DC accompagnant le mouvement de l'élément de transfert ET au cours de la coupe.

Cette opération peut également se faire par rotation relative du dispositif de coupe pendant le transfert de l'élément de transfert.

Après la découpe du trognon T, la partie utile PU de la pièce se détache, le trognon restant accroché aux crochets 11 de l'élément de transfert ET qui poursuit son chemin C-ET, laisse tomber le trognon T dans un réceptacle et revient à l'entrée du poste d'accrochage PA.

La figure 2B montre une extension de l'installation avec le poste de coupe PC en aval du poste d'étrognage PE ainsi qu'un moyen de transfert de la partie utile PU de la pièce étrognée, dans le poste de coupe PC.

Ce moyen de transfert se compose, comme déjà évoqué ci-dessus, d'un ensemble de modules de coupe MC circulant entre le poste d'étrognage PE et le poste de coupe PC. Ces modules de coupe MC se composent d'un corps 30 logeant un support de coupe 31, mobile en translation entre une position abaissée et une position relevée ainsi qu'une aiguille 32 portée par le support 31, mobile entre une position sortie pour se fixer dans la pièce et une position rétractée.

Le corps 30 comporte un premier vérin 33 commandant le mouvement du support de coupe 31 et un second vérin 34 à l'intérieur du support de coupe 31 pour commander le déplacement de l'aiguille 32.

En fait, dans le cas le plus simple, il n'est prévu qu'une aiguille 32 en position de préférence centrale. Mais on peut également prévoir, suivant la nature des pièces à fixer, deux ou trois aiguilles en position symétrique.

Le module de coupe MC avec son support de coupe 31 est aligné sur l'élément de transfert ET associé, à l'entrée du poste d'étrognage PE pour ensuite se fixer dans la pièce P. Pour cela, le support de coupe MC est conduit jusque contre le dessous de la pièce P accrochée à l'élément de transfert ET. Puis, l'aiguille 32 est enfoncée dans la pièce P, par en dessous, sur une longueur suffisante pour bien maintenir la pièce sans toutefois gêner le travail de découpe du trognon T.

L'ensemble ainsi formé par l'élément de transfert ET et le module de coupe MC de part et d'autre (en position « diamétralement opposée ») de la pièce P passe alors dans le dispositif de découpe 20. En sortie de ce dispositif, la partie utile PU de la pièce ne se détache pas du trognon mais reste tenue par l'aiguille 32. On abaisse ensuite le support de coupe 31 dans le module de coupe MC sans rétracter l'aiguille 32 de manière à tenir la partie utile PU de la pièce P. Le module de coupe MC poursuit son chemin C-MC pour arriver dans le poste de coupe PC. Ce poste de coupe PC se compose d'un couteau 40, de préférence fixe, occupant une position diamétrale, ou s'il s'agit de plusieurs couteaux, une position rayonnante par rapport à l'axe de coupe de la pièce P/PU. Ce couteau 40 peut être en position fixe ou accompagner le module de coupe MC si celui-ci continue son mouvement sans s'arrêter pour travailler en cinématique continue.

La coupe se fait alors par la commande du support de coupe 31 qui soulève la pièce PU et l'applique contre le couteau 40 pour la diviser. Après cette opération, lorsque la pièce est divisée, le module de coupe MC transporte la pièce coupée, vers un poste de conditionnement, ou rétracte son aiguille de façon à libérer complètement les morceaux coupés qui sont alors recueillis d'une manière non représentée pour être conditionnées ou traitées. Selon une variante non représentée le couteau est mobile.

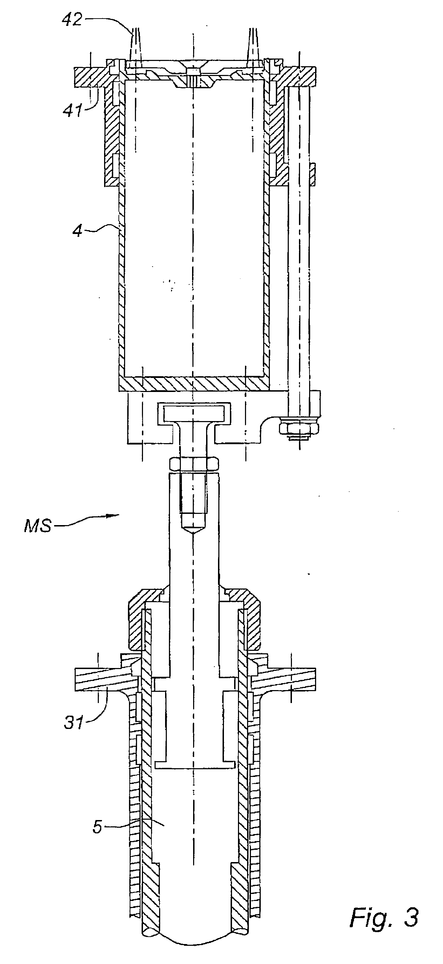

La figure 3 est une vue en coupe du module de support MS. Cette figure montre non seulement le module mais également le vérin d'actionnement 5 logé dans le corps 3 du module représenté par ses parties de guidage et de maintien 31. Le module de positionnement se compose d'une pièce cylindrique dont le dessus forme le support 41 porte les picots 42 destinés à s'embrocher dans la pièce à transférer vers le poste d'accrochage. Le guidage du support de positionnement 41 est assuré par le moyen 31 et sa commande en déploiement ou en rétraction est commandée par le vérin à double effet 5.

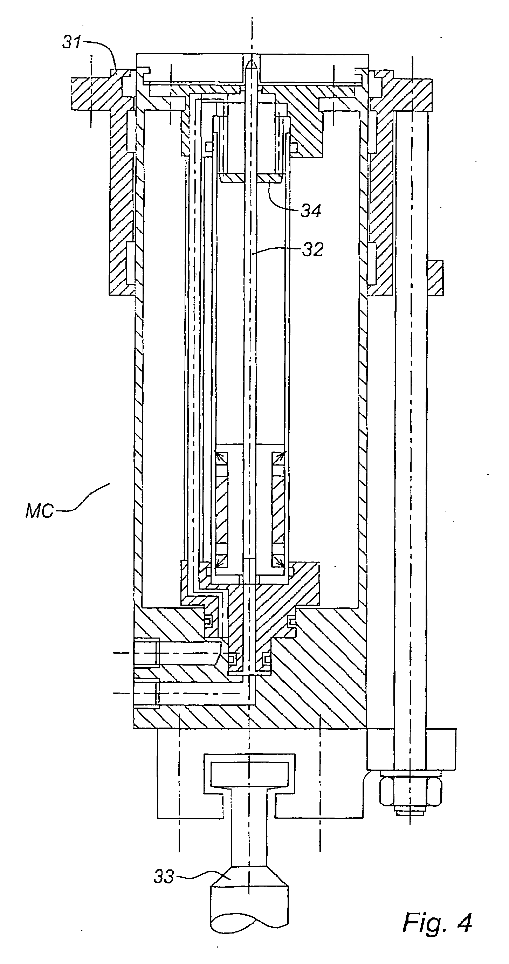

La figure 4 est une vue en coupe d'un module de coupe MC de construction voisine, voire identique, pour l'essentiel à celle du module de support MS sauf que le support de coupe 31 comporte une aiguille 32 et un vérin 34 pour actionner l'aiguille 32 dans les conditions déjà expliquées. L'ensemble formé par le support de coupe MC et l'aiguille 32 est commandé en translation par un premier vérin 33 et le mouvement de déploiement ou de rétraction de l'aiguille est commandé par un second vérin 34.

## Revendications

1. Procédé pour préparer des têtes de salade avec des moyens pour enlever le trognon de la tête avant de découper celle-ci, selon lequel on forme une ligne lumineuse, visible, sur un module de support puis, on met la pièce en place sur le support et on transporte la pièce ainsi positionnée dans le module pour l'étrogner,
**caractérisé en ce qu'**
on forme la ligne de repère lumineuse (2), visible, dans la zone de mise en place de la pièce (P) sur le support de réception (4), cette ligne définissant l'orientation de la pièce (P) puis on met la pièce en place sur le support (4) en la bloquant et on la transporte ainsi positionnée avec le support (4) jusque contre un moyen d'accrochage (ET) pour reprendre automatiquement la pièce (P) et l'accrocher en vue de la transporter pour l'étrogner.

2. Installation pour préparer des têtes de salade comportant des moyens pour enlever le trognon de la tête avant de la découper,
comprenant
- un poste de positionnement des pièces,
- un poste d'étrognage dans lequel on enlève le trognon de la pièces,
- un ensemble de modules pour recevoir les pièces et les transporter, ces modules (MS) parcourant un chemin de positionnement traversant le poste de positionnement,
**caractérisée en ce qu'**
- un ensemble de modules de support (MS) ayant chacun un support de réception et de blocage (4) pour recevoir et bloquer les pièces et les transporter,
ces modules (MS) parcourant un chemin de positionnement (C-MS) traversant le poste de positionnement (PP),
- le poste de positionnement (PP) comportant un générateur (1) formant une ligne de repère (2), lumineuse, dans une position définie par rapport au module de support (MS) arrivant dans le poste de positionnement pour définir la position de mise en place de la pièce (P) par rapport au support de réception (4),
- un poste d'accrochage (PA) reprend les pièces (P) positionnées dans les supports de réception (4), pour les transporter en position suspendue et
- le poste d'étrognage (PE) enlève le trognon (T) de la pièce en position suspendue,
- un ensemble d'éléments de transfert (ET) munis d'organes d'accrochage (11) pour se fixer dans la pièce (P) au niveau du trognon (T), circulant sur un chemin de transfert (C-ET) qui rejoint le chemin de positionnement (C-MS) et traverse le poste d'accrochage (PA) et le poste d'étrognage (PE),
* le poste d'accrochage (PA) recevant les pièces orientées (P), portées par les modules de support (MS),
* le poste d'étrognage (PE) comportant un dispositif de coupe (DC) muni d'un couteau (21) recevant successivement les éléments de transfert (ET) pour étrogner les pièces (P) dont le trognon coupé reste accroché aux éléments de transfert (ET).

3. Installation selon la revendication 2,
**caractérisée en ce qu'**
elle comprend, en plus, un poste de coupe (PC) en aval du poste d'étrognage (PE), ce poste étant muni d'un couteau (40) pour diviser la pièce étrognée (PU) en plusieurs parties et un ensemble de modules de coupe (MC) circulant sur un chemin de coupe (C-MC) traversant le poste d'étrognage (PE) et rencontrant le chemin de transfert (C-ET) pour fixer chaque module (MC) à une pièce (P) accrochée à un élément de transfert (ET) et passer ensemble (MC/P/ET) dans le dispositif d'étrognage (ET) qui découpe le trognon (T) accroché à l'élément de transfert (ET) pour le séparer de la partie utile (PU) de la pièce (P) qui reste fixée à son module de coupe (MC) pour être transportée dans le poste de coupe (PC).

4. Installation selon la revendication 2,
**caractérisée en ce que**
le module de support (MS) se compose d'un corps (3) avec un support de réception (4, 41) muni de picots (42) sur lesquels on embroche une pièce (P) pour la positionner,
ce support (4) étant mobile en translation verticale par rapport au corps (3), commandé par un actionneur (5) en fonction de la position du module (MS) sur son chemin (C-MS),
* en position basse pour la mise en place de la pièce (P) dans le poste de positionnement (PP) et
* en position haute pour conduire la pièce (P) sous un élément de transfert (ET) dans le poste d'accrochage (PA).

5. Installation selon la revendication 2,
**caractérisée en ce que**
le générateur de faisceau (1) dirige son faisceau formant la ligne de repère lumineuse (2) sur le module de support (MS) arrivant dans le poste de positionnement (PP) pour le suivre pendant la mise en place de la pièce (P).

6. Installation selon la revendication 2,
**caractérisée en ce que**
l'élément de transfert (ET) comporte des crochets (11) actionnés pour se fixer dans le trognon (T) de la pièce (P) en laissant le contour dégagé pour le passage du couteau d'étrognage (21).

7. Installation selon la revendication 2,
**caractérisée en ce que**
le poste d'étrognage (PE) comprend
- un dispositif de coupe (DC) muni d'un couteau (21), mobile entre une position rétractée et une position de coupe enfoncée dans la pièce à étrogner,
- un dispositif d'entraînement (22) en rotation de l'élément de transfert (ET) en position de coupe.

8. Installation selon la revendication 7,
**caractérisée en ce que**
le couteau (21) effectue un mouvement vibrant pendant la coupe.

9. Installation selon la revendication 3,
**caractérisée en ce que**
le module de coupe (MC) comprend un corps (30) recevant
- un support de coupe (31) mobile en translation entre une position abaissée et une position relevée,
- une aiguille (32) portée par le support (31), mobile entre une position sortie pour se fixer dans la pièce (P) et une position rétractée,
- un premier et un second vérin (33, 34) commandant respectivement le déplacement du support (31) par rapport au corps (30) et celui de l'aiguille (32).

10. Installation selon les revendications 3,
**caractérisée en ce que**
le couteau (40) du poste de coupe (PC) est fixe, décalé par rapport au trajet de l'aiguille (32) du module de coupe (MC).

11. Installation selon la revendication 3,
**caractérisée en ce que**
le couteau du poste de coupe (PC) est mobile, décalé par rapport à l'aiguille (32) du module de coupe (MC).

## Claims

1. Method for preparing salad heads with means for removing the stalk from the head before cutting it, according to which a visible luminous line is formed on a support module then the item is placed on the support and the item positioned in this manner is transported in the module in order to remove the stalk,
**characterised in that**
the visible luminous reference line (2) is formed in the zone in which the item (P) is positioned on the receiving support (4), this line defining the orientation of the item (P), then the item is positioned on the support (4), and is blocked, and it is transported positioned in this manner with the support (4) until it abuts a securing means (ET) to automatically collect the item (P) and secure it to transport it in order to remove the stalk.

2. Installation for preparing salad heads comprising means for removing the stalk from the head before cutting it, comprising
- a station for positioning the items,
- a destalking station in which the stalk is removed from the item,
- an assembly of modules for receiving the items and transporting them, these modules (MS) travelling a positioning path which extends across the positioning station,
**characterised in that**
- an assembly of support modules (MS) which each have a receiving and blocking support (4) for receiving and blocking the items and transporting them,
these modules (MS) travelling a positioning path (C-MS) which extends across the positioning station (PP),
- the positioning station (PP) comprising a generator (1) which forms a luminous reference line (2) in a defined position relative to the support module (MS) which arrives in the positioning station to define the position in which the item (P) is placed relative to the receiving support (4),
- a securing station (PA) collects the items (P) positioned in the receiving supports (4) in order to transport them in a suspended position and
- the destalking station (PE) removes the stalk (T) from the item in a suspended position,
- an assembly of transfer elements (ET) provided with securing members (11) to be fixed in the item (P) in the region of the stalk (T), moving over a transfer path (C-ET) which joins the positioning path (C-MS) and extends across the securing station (PA) and the destalking station (PE),
* the securing station (PA) receiving the orientated items (P) which are carried by the support modules (MS),
* the destalking station (PE) comprising a cutting device (DC) which is provided with a blade (21) which successively receives the transfer elements (ET) in order to remove the stalk from the items (P) whose cut stalk remains secured to the transfer elements (ET).

3. Installation according to claim 2,
**characterised in that**
it further comprises a cutting station (PC) downstream of the destalking station (PE), this station being provided with a blade (40) to divide the destalked item (PU) into several parts and an assembly of cutting modules (MC) which move over a cutting path (C-MC) which extends across the destalking station (PE) and joins the transfer path (C-ET) to fix each module (MC) to an item (P) which is secured to a transfer element (ET) and move together (MC/P/ET) into the destalking device (ET) which cuts the stalk (T) secured to the transfer element (ET) in order to separate it from the useful part (PU) of the item (P) which remains fixed to the cutting module (MC) thereof to be transported into the cutting station (PC).

4. Installation according to claim 2,
**characterised in that**
the support module (MS) is composed of a body (3) with a receiving support (4, 41) which is provided with pins (42) to which an item (P) is connected in order to position it,
the support (4) being movable in vertical translation relative to the body (3) controlled by an actuator (5) in accordance with the position of the module (MS) over the path (C-MS) thereof,
* in a lower position in order to position the item (P) in the positioning station (PP) and
* in an upper position in order to guide the item (P) below a transfer element (ET) in the securing station (PA).

5. Installation according to claim 2,
**characterised in that**
the beam generator (1) directs the beam thereof which forms the luminous reference line (2) onto the support module (MS) which arrives in the positioning station (PP) in order to follow it as the item (P) is positioned.

6. Installation according to claim 2,
**characterised in that**
the transfer element (ET) comprises hooks (11) which are activated so as to be fixed in the stalk (T) of the item (P), leaving the contour free for the passage of the destalking blade (21).

7. Installation according to claim 2,
**characterised in that**
the destalking station (PE) comprises
- a cutting device (DC) which is provided with a blade (21) which can be moved between a retracted position and a cutting position embedded in the item to be destalked,
- a device (22) for rotatably driving the transfer element (ET) in the cutting position.

8. Installation according to claim 7,
**characterised in that**
the blade (21) carries out a vibrating movement during the cutting operation.

9. Installation according to claim 3,
**characterised in that**
the cutting module (MC) comprises a body (30) which receives
- a cutting support (31) which can be moved in translation between a lowered position and a raised position,
- a needle (32) which is carried by the support (31) and which can be moved between an extended position for becoming fixed in the item (P) and a retracted position,
- a first and a second jack (33, 34) which control the movement of the support (31) relative to the body (30) and that of the needle (32), respectively.

10. Installation according to claim 3,
**characterised in that**
the blade (40) of the cutting station (PC) is fixed so as to be offset relative to the path of the needle (32) of the cutting module (MC).

11. Installation according to claim 3,
**characterised in that**
the blade of the cutting station (PC) can be moved so as to be offset relative to the needle (32) of the cutting module (MC).

## Patentansprüche

1. Verfahren zum Vorbereiten von Salatköpfen mit Einrichtungen zum Beseitigen des Strunks des Kopfs, bevor der Kopf geschnitten wird, wobei eine sichtbare leuchtende Linie auf einem Trägermodul gebildet wird, dann das Stück auf dem Träger angeordnet wird und das auf diese Weise in dem Modul angeordnete Stück transportiert wird, um den Strunk zu beseitigen,
**dadurch gekennzeichnet, daß** die sichtbare leuchtende Markierungslinie (2) in der Positionierungszone des Stücks (P) auf dem Aufnahmeträger (4) gebildet wird, wobei diese Linie die Orientierung des Stücks (P) definiert, dann das Stück auf dem Träger (4) angeordnet und gesichert wird und es dann so angeordnet mit dem Träger (4) bis an eine Aufhängeeinrichtung (ET) transportiert wird, damit das Stück (P) zum Beseitigen seines Strunks transportiert, automatisch ergriffen und aufgehängt wird.

2. Vorrichtung zum Vorbereiten von Salatköpfen mit Einrichtungen zum Beseitigen des Strunks des Kopfs, bevor der Kopf geschnitten wird, mit:
- einer Positionierungsstation zum Positionieren der Stücke,
- einer Strunkbeseitigungsstation, in welcher der Strunk der Stücke beseitigt wird,
- einer Anordnung von Modulen, um die Stücke aufzunehmen und sie zu transportieren, wobei diese Module (MS) einen Positionierungsweg durchlaufen, der durch die Positionierungsstation (PP) hindurchgeht,
**dadurch gekennzeichnet, daß**
- mehrere Trägermodule (MS) jeweils einen Aufnahme- und Sicherungsträger (4) aufweisen, um die Stücke aufzunehmen und zu sichern und sie zu transportieren,
wobei diese Module (MS) einen Positionierungsweg (C-MS) durchlaufen, der durch die Positionierungsstation (PP) hindurchgeht,
- die Positionierungsstation (PP) einen Generator (1) aufweist, der eine leuchtende Markierungslinie (2) in einer Position, die in bezug auf das an der Positionierungsstation ankommende Trägermodul (MS) festgelegt ist, erzeugt, um die Anordnungsposition zum Anordnen des Stücks (P) bezüglich des Aufnahmeträgers (4) festzulegen,
- eine Aufhängestation (PA) die in den Aufnahmeträgern (4) angeordneten Stücke (P) greift, um sie in aufgehängter Position zu transportieren, und
- die Strunkbeseitigungsstation (PE) den Strunk (T) des Stücks in aufgehängter Position beseitigt,
- mehrere Übertragungselemente (ET), die mit Aufhängeteilen (11) versehen sind, um sich in dem Stück (P) im Bereich des Strunks (T) zu verankern, auf einem Übertragungsweg (C-ET) umlaufen, der auf den Positionierungsweg (C-MS) trifft und durch die Aufhängestation (PA) und die Strunkbeseitigungsstation (PE) hindurchgeht,
* wobei die Aufhängestation (PA) die orientierten, von den Trägermodulen (MS) getragenen Stücke (P) empfängt,
* wobei die Strunkbeseitigungsstation (PE), die eine mit einem Messer (21) versehene Schneidevorrichtung (DC) aufweist, die Übertragungselemente (ET) der Reihe nach empfängt, um die Stücke (P) von ihrem Strunk zu befreien, deren abgeschnittener Strunk an den Übertragungselementen (ET) aufgehängt bleibt.

3. Vorrichtung nach Anspruch 2, **dadurch gekennzeichnet, daß**
sie nach der Strunkbeseitigungsstation (PE) außerdem eine Schneidestation (PC) aufweist, wobei diese Station mit einem Messer (40) versehen ist, um das von seinem Strunk befreite Stück (PU) in mehrere Teile zu teilen, sowie mit einer Anordnung von Schneidemodulen (MC) versehen ist, die auf einem Schneideweg (C-MC) umlaufen, der durch die Strunkbeseitigungsstation (PE) hindurchgeht und auf den Übertragungsweg (C-ET) trifft, um jedes Modul (MC) an einem Stück (P), das an einem Übertragungselement (ET) aufgehängt ist, zu befestigen und das Ganze (MC/P/ET) in die Strunkbeseitigungsvorrichtung zu führen, die den an dem Übertragungselement (ET) aufgehängten Strunk (T) schneidet, um ihn von dem nutzbaren Teil (PU) des Stücks (P) zu trennen, der an seinem Schneidemodul (MC) befestigt bleibt, um in die Schneidestation (PC) transportiert zu werden.

4. Vorrichtung nach Anspruch 2, **dadurch gekennzeichnet, daß**
das Trägermodul (MS) einen Körper (3) mit einem Aufnahmeträger (4,41) aufweist, der mit Spießen (42) versehen ist, an welchen ein Stück (P) aufgespießt wird, um es zu positionieren,
wobei dieser Träger (4) eine von einem Aktuator (5) in Abhängigkeit von der Position des Moduls (MS) auf seinem Weg (C-MS) gesteuerte vertikale Translationsbewegung bezüglich des Körpers (3) durchführen kann, und zwar
* in der Positionierungsstation (PP) in eine untere Position für das Anordnen des Stücks (P) und
* in der Aufhängestation (PA) in eine obere Position, um das Stück (P) unter ein Übertragungselement (ET) zu führen.

5. Vorrichtung nach Anspruch 2, **dadurch gekennzeichnet, daß**
der Lichtbündelgenerator (1) sein Lichtbündel, das die leuchtende Markierungslinie (2) bildet, auf das an der Positionierungsstation (PP) ankommende Trägermodul (MS) richtet, um es während des Anordnens des Stücks (P) zu verfolgen.

6. Vorrichtung nach Anspruch 2, **dadurch gekennzeichnet, daß**
das Übertragungselement (ET) Haken (11) aufweist, die betätigt werden, um sich in dem Strunk (T) des Stücks (P) zu verankern, wobei die Kontur freibleibt, um das Strunkbeseitigungsmesser (21) vorbei gehen zu lassen.

7. Vorrichtung nach Anspruch 2, **dadurch gekennzeichnet, daß** die Strunkbeseitigungsstation (PE) aufweist:
- eine Schneidevorrichtung (DC), die mit einem Messer (21) versehen ist, das zwischen einer zurückgezogenen Position und einer Schneideposition, in welcher es in das Stück, dessen Strunk zu beseitigen ist, eingedrungen ist, bewegbar ist,
- eine Antriebsvorrichtung (22), um in einer Schneideposition das Übertragungselement (ET) in Drehung zu versetzen.

8. Vorrichtung nach Anspruch 7, **dadurch gekennzeichnet, daß** das Messer (21) während des Schneidens eine schwingende Bewegung ausführt.

9. Vorrichtung nach Anspruch 3, **dadurch gekennzeichnet, daß**
das Schneidemodul (MC) einen Körper aufweist (30), der aufnimmt:
- einen Schneideträger (31), der zwischen einer abgesenkten Position und einer angehobenen Position verschiebbar ist,
- eine von dem Träger (31) gehaltene Nadel (32), die zwischen einer ausgefahrenen Position, um sich in dem Stück (P) zu verankern, und einer zurückgezogenen Position bewegbar ist,
- ein erstes und zweites Stellglied (33,34), die die Verschiebung des Trägers (31) bezüglich des Körpers (30) bzw. diejenige der Nadel (32) steuern.

10. Vorrichtung nach Anspruch 3, **dadurch gekennzeichnet, daß** das Messer (40) der Schneidestation (PC) stationär ist und bezüglich des Wegs der Nadel (32) des Schneidemoduls (MC) versetzt angeordnet ist.

11. Vorrichtung nach Anspruch 3, **dadurch gekennzeichnet, daß** das Messer (40) der Schneidestation (PC) bewegbar ist und bezüglich der Nadel (32) des Schneidemoduls (MC) versetzt angeordnet ist.
